# EUROPÄISCHE PATENTSCHRIFT

(11) **EP 0 378 776 B1**
(45) Veröffentlichungstag und Bekanntmachung des Hinweises auf die Patenterteilung: **01.06.1994**
(21) Anmeldenummer: 89121001.5
(22) Anmeldetag: 13.11.1989
(51) Int. Cl.: H04Q 11/04

(54) **Verfahren zur Steuerung des Verbindungsaufbaus in Kommunikations-Vermittlungsanlagen**
Method for controlling the establishing of connexions in a communication exchange
Méthode pour commander l'établissement des liaisons dans un central de communication

(30) Priorität: 19.01.1989 DE 3901433
(43) Veröffentlichungstag der Anmeldung: 25.07.1990
(73) Patentinhaber: TELENORMA GMBH, 60326 Frankfurt am Main (DE)
(72) Erfinder: Braun, Heinz M., Dipl.-Ing., D-4047 Dormagen 1 (DE)

(56) Entgegenhaltungen:
- DE-A- 2 838 142
- US-A- 4 633 461
- NACHRICHTEN ELEKTRONIK UND TELEMATIK, vol. sond., April 1988, HEIDELBERG, DE, Seiten 74-79; A. Kessler: "Systemfamilie in Hochtechnologie"

## Beschreibung

Die Erfindung betrifft ein Verfahren zur Steuerung des Verbindungsaufbaus in Kommunikations-Vermittlungsanlagen nach dem Oberbegriff des Patentanspruches 1.

Aus der DE-PS 30 11 646 ist eine mehrstufige Koppelanordnung für nach dem Zeitmultiplex-Prinzip digital durchschaltende Fernmelde-, insbesondere Fernsprechvermittlungsanlage bekannt. Dabei sind den einzelnen Anschlußorganen sogenannte Zwischenschalteinrichtungen zugeordnet, welche den Zugang auf mehr als eine Sammelschiene ermöglichen. Mit der Bestimmung des Durchschaltezeitpunktes wird auch der Koppelweg vorgegeben. Bei dieser Koppelanordnung kann eine Durchschaltung nur dann erfolgen, wenn auf dem gleichen Verbindungsweg auch gleiche Zeitlagen frei sind. Es wird lediglich dafür gesorgt, daß durch räumliches Parallelschalten von als Sammelschienen ausgeführten Verbindungswegen die Anzahl der insgesamt verfügbaren Kanäle erhöht wird. Da eine Zeitlagenumsetzung nicht vorgesehen ist, kommt es insbesondere bei sehr vielen Anschlußorgangruppen vor, daß Verbindungen nicht zustande kommen können, weil in der Zielgruppe nicht die Zeitlagen frei sind, welche beim Beginn des Verbindungsaufbaues vorgegeben werden.

Ein rechnergesteuertes Fernmeldevermittlungssystem mit Zeitvielfach-Durchschaltung ist aus der DE-PS 28 38 142 bekannt. Hier wird in Spalte 20 ab Zeile 45 beschrieben, daß durch den Zentralprozessor eine nicht besetzte Verbindungsleitung und eine freie Zeitlage dafür ausgewählt wird, wenn das Ziel einer Verbindung ermittelt worden ist. Es sind außerdem Zeitlagenumsetzer vorgesehen, so daß die Wahrscheinlichkeit einer Verbindungsdurchschaltung sehr groß ist. Bei einer derartigen Anordnung wird jedoch bei jeder Verbindung der Zentralprozessor für die Wegesuche und die Zeitlagenbestimmung herangezogen, so daß für jede einzelne Verbindung eine nicht zu vernachlässigende Belegungszeit auftritt. Dies kann insbesondere bei größeren Vermittlungsanlagen zu Überlastungen der zentralen Steuereinrichtung führen, so daß Wartezeiten entstehen können, welche den Betrieb empfindlich stören.

Aus der DE-PS 31 06 903 ist eine Schaltungsanordnung für Zeitmultiplex-Fernmeldevermittlungsanlagen, insbesondere PCM-Fernsprechvermittlungsanlagen mit Datenwegen zwischen einem zentralen Steuerwerk und dezentralen Steuereinrichtungen bekannt. Dort ist ein aus 3 Koppelstufen bestehendes, räumlich durchschaltenden Zeitmultiplexkoppelfeld vorgesehen, welches in erster Linie zur Durchschaltung der Sprechwege dient. Dieses Koppelfeld weist Zeitmultiplexeingänge und Zeitmultiplexausgänge sowie Zeitmultiplexzwischenleitungen auf, worüber außer den Sprechwegen auch Datenkanäle durchgeschaltet werden. Diese Datenkanäle dienen dazu, die dezentralen Steuereinrichtungen untereinander und mit dem zentralen Steuerwerk zu verbinden. In der vorgenannten Patentschrift ist lediglich im einzelnen ausgeführt, auf welche Weise die Datenkanäle innerhalb des räumlich durchschaltenden Koppelnetzwerkes verlaufen, und daß über diese Datenkanäle auch Überwachungsfunktionen übertragen werden. Es ist in dieser Patentschrift nicht beschrieben, auf welche Weise die Zeitlagen und Durchschaltewege festgelegt werden, und welche Steuereinrichtung dafür zuständig ist.

Die Aufgabe der Erfindung besteht darin, ein Verfahren anzugeben, wobei die Vergabe von Zeitlagen und Durchschalte wegen dezentral erfolgt, so daß die zentrale Steuereinrichtung von der Zeitlagenverwaltung entlastet wird. Die Verkehrsleistung der Vermittlungsanlage soll dabei nicht beeinträchtigt werden.

Zur Lösung dieser Aufgabe sind Merkmale vorgesehen, wie sie im Patentanspruch 1 angegeben sind.

Damit wird in vorteilhafter Weise erreicht, daß für die Zeitlagenverwaltung und für die Bestimmung des Durchschalteweges ausschließlich die dezentralen Steuereinrichtungen zuständig sind, so daß die zentrale Steuereinrichtung lediglich noch zur Zielortbestimmung und zur Entgegennahme der Durchschaltebefehle für die räumlichen Koppeleinrichtungen zuständig ist.

In den Unteransprüchen sind vorteilhafte Weiterbildungen der Erfindung angegeben.

Ein Ausführungsbeispiel der Erfindung wird nachfolgend anhand von Zeichnungen näher erläutert.

Es zeigt
- Fig. 1: das Blockschaltbild einer Kommunikations Vermittlungsanlage mit einem Zeit-Raum-Zeit-Koppler.
- Fig. 2: das Schema des Informationsaustausches zwischen den Steuereinrichtungen

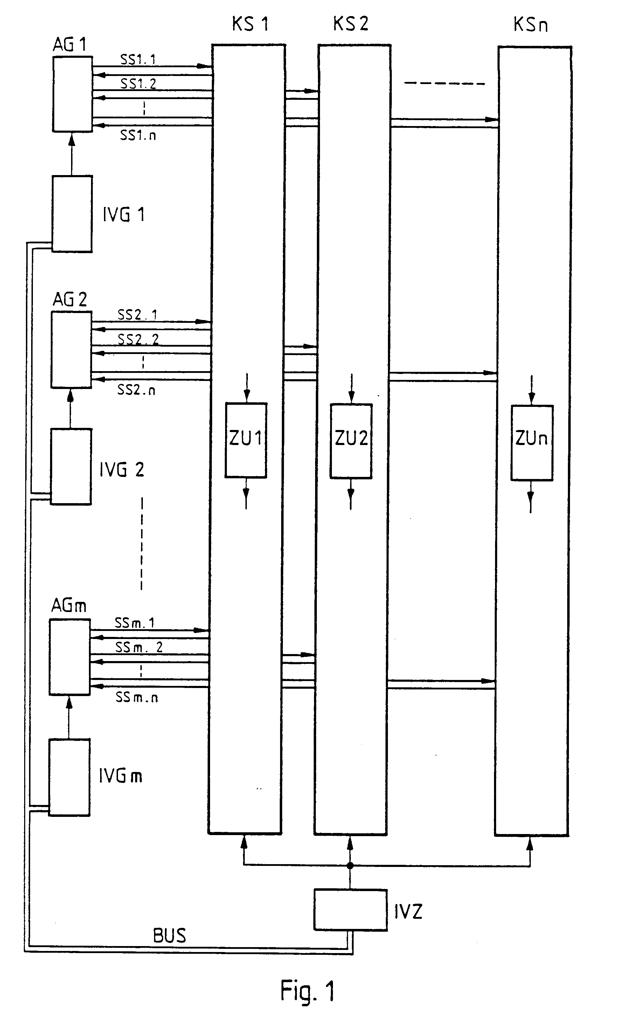

In der Fig. 1 ist das Schema einer Kommunikations-Vermittlungsanlage dargestellt, welche Koppeleinrichtungen aufweist, die nach dem Zeit-Raum-Zeit Prinzip im Zeitmultiplexverfahren digital durchschalten. Jede der Anschlußorgangruppen AG1 - AGm beinhaltet einen Zeitvielfachkoppler, womit die Verbindungen zeitlich nacheinander auf Sammelschienen hergestellt werden. Um dieAnzahl der insgesamt verfügbaren Zeitlagen zu erhöhen, sind mehrere Sammelschienen SS1.1 - SS1.n pro Anschlußorgangruppe, z. B. AG1, vorgesehen. Diese Sammelschienen bestehen aus einer Sendeleitung und einer Empfangsleitung. Die Sammelschienen sind jeweils getrennt zu räumlich durchschaltenden Koppelstufen KS1 - KSn geführt und können jeweils so miteinander verbunden werden, daß eine Sendeleitung zur Empfangsleitung der eigenen Gruppe oder einer anderen Gruppe durchgeschaltet wird. Die räumlich durchschaltenden Koppelstufen KS1 - KSn enthalten Zeitlagen-Umsetzeinrichtungen ZU1 - ZUn, womit in bekannter Weise bewirkt werden kann, daß die zu einer Sendezeitlage empfangene Information zu einer anderen Zeitlage auf eine Empfangsleitung gegeben werden kann.

Die Anschlußorgangruppen AG1 - AGn werden von einer zugeordneten dezentralen Gruppensteuerung IVG1 - IVGn gesteuert, wobei alle von den Anschlußorganen kommenden Kriterien empfangen und verarbeitet werden, sowie alle zu den Anschlußorganen zusendenden Informationen bereit gestellt werden. Außerdem wird in den Gruppensteuerungen IVG1 - IVGm, wie dies, später noch erläutert wird, festgelegt, zu welchen Zeitlagen die einzelnen Verbindungen durchzuschalten sind. Die Gruppensteuerungen IVG1 -IVGm stehen über ein Datenleitungsvielfach BUS untereinander in Verbindung und können gegenseitig Informationen austauschen. An diesem Datenleitungsvielfach BUS ist außerdem eine zentrale Steuerung IVZ angeschlossen, welche die Aufgabe hat, die räumlich durchschaltenden Koppelstufen KS1 - KSn zu steuern und übergeordnete zum Verbindungsaufbau dienenden Funktionen auszuführen.

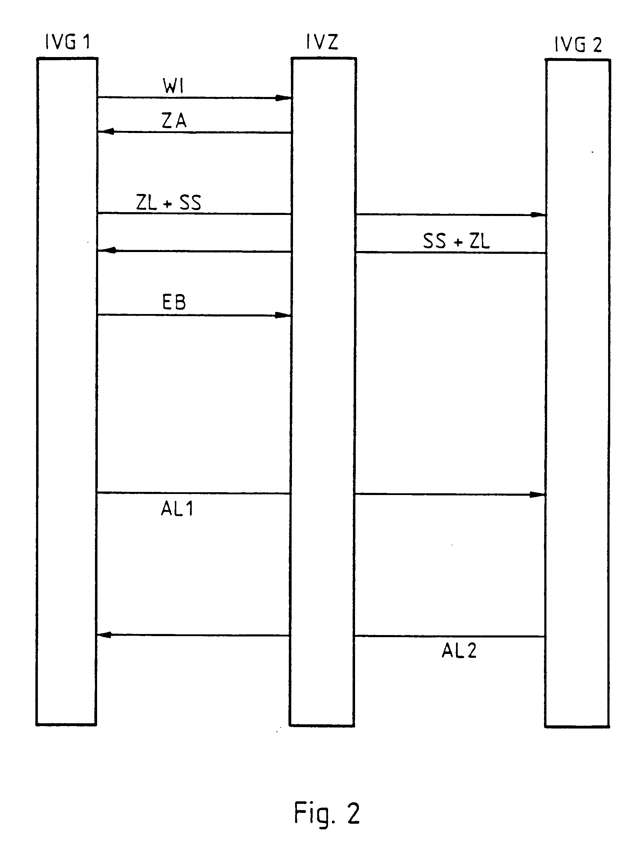

Anhand der Fig. 2 wird nun beschrieben, welche Schritte nacheinander bei einem typischen Verbindungsaufbau aufeinander folgen. Es sei angenommen, daß ein nicht dargestelltes Anschlußorgan der ersten Anschlußorgangruppe AG1 eine Meldung abgibt, welche besagt, daß eine Verbindung aufgebaut werden soll. Diese Meldung wird in der zugehörigen Gruppensteuerung IVG1 erkannt und so interpretiert, daß dem Anschlußorgan entsprechend eine Rückmeldung erfolgt. Dies geschieht bei Fernsprech-Endgeräten dadurch, daß eine Hörton-Zeitlage zugeteilt wird, worüber der Wählton ausgesendet wird. Der Fernsprechteilnehmer kann nun mit der Wahl beginnen. In der dezentralen Gruppensteuerung IVG1 befindet sich eine Auswertelogik, welche feststellen kann, ob genügend Ziffern gewählt worden sind, um damit eine Verbindung aufbauen zu können. Es wird also lediglich festgestellt, wann die Wahl zu Ende ist, ohne daß dabei das Ziel direkt ermittelt wird. Wenn auf diese Weise das Wahlende erkannt worden ist, so wird von der Gruppensteuerung IVG1 eine freie Verbindungszeitlage gesucht. Diese Verbindungszeitlage tritt dann an die Stelle der nach dem Eingeben der ersten Wahlziffer freigeschalteten Hörton-Zeitlage. Bei der Suche nach einer freien Zeitlage werden die einzelnen Sammelschienen SS1.1 - SS1.n zyklisch nacheinander abgesucht, wobei die Suche bei einer jeden neuen Verbindung bei einer anderen Sammelschiene beginnt. Auf diese Weise wird eine gleichmäßige Auslastung der Zeitlagen auf den verschiedenen Sammelschienen erreicht.

Wenn eine freie Zeitlage gefunden worden ist, wird eine Meldung zur zentralen Steuerung IVZ abgesetzt, worin die Wahlinformation WI enthalten ist. Aufgrund dieser Meldung wird die zentrale Steuerung IVZ beauftragt, die Adresse des gewünschten Anschlußes zu ermitteln. Die Gruppensteuerung IVG1 wartet nun auf die Rückantwort von der zentralen Steuereinrichtung IVZ, welche die Zieladresse ZA beinhaltet. An der Zieladresse ZA kann die Gruppensteuerung IVG1 erkennen, welche Gruppensteuerung z. B. IVG2, für das gewünsche Anschlußorgan zuständig ist. Daraufhin wird von der den Verbindungsaufbau einleitenden Gruppensteuerung IVG1 eine Meldung zusammengestellt und an die Gruppensteuerung IVG2 der Zielgruppe AG2 geschickt. In dieser Meldung ist eine Information über die belegte Zeitlage und die belegte Sammelschiene, z. B. SS1.1, enthalten. Die angesprochene Gruppensteuerung IVG2 der Zielgruppe AG2 stellt nun durch Absuchen fest, ob auf der gleichen Sammelschiene SS1.1, bzw. SS2.1 noch Zeitlagen frei sind. Es erfolgt dann eine Rückmeldung zu der den Verbindungsaufbau einleitenden Gruppensteuerung IVG1 worin eine freie Zeitlage ZL und die zugehörige Sammelschiene enthalten ist. Falls auf der von der ersten Gruppensteuerun IVG1 angebotenen Sammelschienenbeziehung SS1.1/SS2.1 von der Gruppensteuerung IVG2 der Zielgruppe AG2 keine freie Zeitlage gefunden wird, so wird eine weitere Zeitlagensuche auf einer anderen Sammelschienenbeziehung vorgenommen. Auf jeden Fall wird von der Gruppensteuerung IVG2 der Zielgruppe AG2 eine Rückmeldung an die erste Gruppensteuerung IVG1 abgesendet, worin die gefundene Zeitlage ZL und die zugehörige Sammelschiene SS enthalten ist. Falls die von der zweiten Gruppensteuerung IVG2 gefundene freie Zeitlage ZL sich nicht auf derselben Sammelschienenbeziehung SS1.1 befindet, wie sie von der ersten Gruppensteuerung IVG1 angeboten wurde, so muß von der ersten Gruppensteuerung IVG1 eine erneute Zeitlagensuche durchgeführt werden, wenn von der zweiten Gruppensteuerung IVG2 eine andere Sammelschienenbeziehung angeboten wird. Die in der Gruppensteuerung IVG2 der Zielgruppe AG2 vorzunehmende Zeitlagensuche wird also immer zunächst in Bezug auf diejenige Sammelschiene SS durchgeführt, welche von der ersten Gruppensteuerung IVG1 angeboten wird. Im allgemeinen genügt es, nur eine weitere Suche durchzuführen, falls auf der angebotenen Sammelschiene SS keine Zeitlage frei ist. Es ist jedoch ohne weiteres möglich die Suche auch auf alle anderen vorhandenen Sammelschienenbeziehungen auszudehnen, wenn dies aus betrieblichen Gründen für erforderlich gehalten wird. Dabei wird eine nahezu vollkommene Erreichbarkeit erzielt. Wenn die zweite Gruppensteuerung IVG2 in ihrer Rückmeldung eine andere Sammelschiene SS anbietet, so muß von der ersten Gruppensteuerung IVG1 eine erneute Zeitlagensuche vorgenommen werden. Falls dabei eine derartige Zeitlagensuche nicht erfolgreich verläuft, muß dem eine Verbindung wünschenden Anschluß der Besetzton zugesendet werden. Vom Prinzip her ist es jedoch auch denkbar, daß von der ersten Gruppensteuerung IVG1 aus weitere Versuche gestartet werden, auf anderen Sammelschienen freie Zeitlagen zu finden. In diesem Fall kann ein Meldungsaustausch, wie er bereits beschrieben worden ist mehrfach nacheinander ablaufen.

Wenn sich nach dem Meldungsaustausch ergeben hat, daß auf ein und derselben Sammelschienenbeziehung, z. B. SS1.1/SS2.1 auf beiden Seiten der Verbindung freie Zeitlagen gefunden wurden, so wird ein Einstellbefehl EB von der ersten Gruppensteuerung IVG1 zur zentralen Steuerung IVZ gesendet. Daraufhin wird in einer der räumlich durchschaltenden Koppelstufen, im Beispiel KS1, eine Verbindung zwischen den Anschlußgruppen AG1 und AG2 hergestellt. Da in dem Einstellbefehl EB auch die auf beiden Seiten belegten Zeitlagen ZL enthalten sind, wird die Zeitlagenumsetzeinrichtung ZU1 so eingestellt, daß die jeweiligen Sendezeitlagen auf die zugehörigen Empfangszeitlagen so umgesetzt werden, daß eine doppelt gerichtete Verbindung zustande gekommen ist.

Bei diesem Verbindungsverfahren wird die gesamte Zeitlagenund Wegesuche dezentral, also von den Gruppensteuerung IVG durchgeführt, ohne daß die zentrale Steuerung IVZ damit belastet wird. Die zentrale Steuerung wird lediglich kurzzeitig belegt, um aus der Wahlinformation WI die Zieladresse ZA zu gewinnen. Für das Durchschalten der Verbindung, wobei zuvor festgestellt worden ist, ob der gewünschte Anschluß frei ist und die Verbindung auch zustande kommen darf, wird die zentrale Steuerung IVZ auch nur kurzzeitig belegt, um den Einstellbefehl zu empfangen. Der Vorteil bei diesem Verfahren besteht u. a. auch darin, daß Suchvorgänge in den dezentralen Gruppensteuerungen IVG zeitlich parallel ablaufen können. Durch die damit verbundene Entlastung der zentralen Steuerung IVZ werden Engpässe vermieden, die an der zentralen Stelle entstehen könnten.

Beim Auslösen von Verbindungen wird zunächst eine Auslösemeldung AL1, bzw. AL2 von derjenigen dezentralen Gruppensteuerung IVG aus abgesendet, welche ein Auslösekriterium eines Anschlußorgans erkennt. Diese Auslösemeldung AL1, bzw. AL2 wird direkt an diejenige Gruppensteuerung IVG adressiert, deren Anschlußorgan an der betreffenden Verbindung beteiligt ist. Die belegten Zeitlagen werden daraufhin auf beiden Seiten freigeschaltet, so daß sie für neue Verbindungen zur Verfügung stehen. Auch bei Auslösevorgängen wird die zentrale Steuerung IVZ nicht zusätzlich belegt, weil entweder automatische Löschungen von nicht benutzten Verbindungsbeziehungen stattfinden können oder weil frei gegebene Verbindungen bei Neueinstellungen durch Überschreiben gelöscht werden.

## Patentansprüche

1. Verfahren zur Steuerung des Verbindungsaufbaus in Kommunikations-Vermittlungsanlagen, welche digital nach dem Zeitmultiplexprinzip durchschalten und eine Zeit-Raum-Zeit-Koppelanordnung aufweisen, um die in Gruppen zusammengefaßten Anschlußorgane miteinander zu verbinden, wobei die Zeitvielfachkoppler über jeweils eigene Sammelschienen (SS1.1 - SS1.n) mit den Raumvielfachkopplern (KS1 - KSn) verbunden sind, und wobei neben dezentralen Gruppensteuerungen (IVG1 - IVGn) mindestens eine zentrale Steuereinrichtung (IVZ) vorgesehen ist,
dadurch gekennzeichnet,
daß die Festlegung des Durchschaltezeitpunktes (Zeitlage) und die Vergabe des Durchschalteweges ausschließlich durch die dezentralen Gruppensteuerungen (IVG) vorgenommen wird, wobei die Zeitlage und die Sammelschiene (SS) kennzeichnende Daten auf direktem Weg über ein gemeinsames Datenleitungssystem (BUS) von der den Verbindungsaufbau einleitenden Gruppensteuerung (z. B. IVG1) zu der Gruppensteuerung (z. B. IVG2) der durch in der zentralen Steuerung (IVZ) erfolgte Wahlauswertung ermittelten Zielgruppe (AG2) gelangen, daß die Gruppensteuerung (IVG2) der Zielgruppe (AG2) zusammen mit einer Information über den Verbindungszustand des gewünschten Anschlußorgans eine Information zu der den Verbindungsaufbau einleitenden Gruppensteuerung (IVG1) der Ursprungsgruppe (AG1) zurücksendet, worin angegeben ist, welche Zeitlagen auf der für die Durchschaltung vorgeschlagenen Sammelschiene (z. B. SS1.1, SS2.1) frei sind,
daß die Gruppensteuerung (IVG2) der Zielgruppe (AG2) beauftragt wird, nach freien Zeitlagen auf mindestens einer weiteren Sammelschiene (z. B. SS2.2., SS1.2) zu suchen, welche beim Zeitvielfachkoppler der Ursprungsgruppe (AG1) freie Zeitlagen aufweist, wenn eine Durchschaltung wegen fehlender freier Zeitlagen bei der Zielgruppe (AG2) auf der ursprünglich vorgesehenen Sammelschiene (SS1.1, SS2.1) nicht möglich war,
daß nach dem Finden von freien Zeitlagen auf beiden Seiten von der den Verbindungsaufbau einleitenden Gruppensteuerung (IVG1) aus eine Information zu der zentralen Steuerung (IVZ) gesendet wird, worin die zu benutzenden Zeitlagen und die Sammelschiene angegeben werden, welche für diese Verbindung durchzuschalten ist,
und daß dan mit in der betreffenden Raumkoppelstufe (KS1 oder KS2) befindlichen Zeitlagenumsetzeinrichtung (ZU1 oder ZU2) .Zeitlagenumsetzungen so vorgenommen werden, daß jeweils eine Sendezeitlage mit einer Empfangszeitlage verbunden wird.

2. Verfahren nach Anspruch 1,
dadurch gekennzeichnet,
daß bei der Suche nach freien Zeitlagen innerhalb der Gruppensteuerung (IVG2) der Zielgruppe (AG2) die Zeitlagen jeweils bezogen auf eine Sammelschiene (SS) betrachtet werden, wobei in Abhängigkeit von der Wertigkeit einer Verbindung entschieden werden kann, ob der Suchvorgang nach der Behandlung einer Sammelschiene (SS) abgebrochen oder fortgesetzt werden soll.

3. Verfahren nach Anspruch 1,
dadurch gekennzeichnet,
daß die Anforderung der zentralen Steuerung (IVZ) für eine Verbindungsdurchschaltung unterbleibt, wenn sich aufgrund des Verbindungszustandes des gewünschten Anschlußorgans und der Berechtigung der beteiligten Anschlußorgane ergibt, daß eine Verbindung nicht zustande kommen kann oder nicht zustande kommen darf.

## Claims

1. Method for the control of the establishment of connections in communications exchanges which connect through digitally on the time-division multiplex principle and display a time-space-time coupling arrangement in order to connect the terminal organs, which are combined in groups, one with the other, wherein the time multiple couplers are each connected by way of respective individual bus bars (SS1.1 to SS1.n) with the space multiple couplers (KS1 to KSn) and wherein - apart from decentralised group controls (IVG1 to IVGn) - at least one central control equipment (IVZ) is provided, characterised thereby, that the fixing of the switching-through instant (time position) and the allocation of the switching-through path is undertaken exclusively by the decentralised group controls (IVG), wherein data identifying the time position and the bus bar (SS) get on a direct path from the group control (for example IVG1), which initiates the establishment of the connection, by way of a common data line system (BUS) to the group control (for example IVG2) of the destination group (AG2) determined by the dialling evaluation that has taken place in the central control (IVZ), that the group control (IVG2) of the destination group (AG2) sends an information signal about the state of connection of the desired terminal organ together with an information signal, which indicates which time positions are free on the bus bar (for example SS1.1, SS2.1) proposed for the switching through, back to the group control (IVG1), which initiates the establishment of the connection, of the originating group (AG1), that the group control (IVG2) of the destination group (AG2) is commanded to search for free time positions on at least one further bus bar (for example SS2.2, SS1.2), which displays free time positions in the time multiple coupler of the originating group (AG1), when a switching-through was not possible because of the absence of free time positions for the destination group (AG2) on the originally provided bus bar (SS1.1, SS2.1), that - after the finding of free time positions on both sides - an information signal, in which the time positions to be used and the bus bar to be switched through for this connection are indicated, is sent from the group control (IVG1), which initiates the establishment of the connection, to the central control (IVZ) and that time position translations are then so undertaken by the time position translating equipment (ZU1 or ZU2) situated in the space coupling stage (KS1 or KS2) concerned that a transmission time position is each time connected with a respective reception time position.

2. Method according to claim 1, characterised thereby, that the time positions are each time considered with reference to a bus bar (SS) during the search for free time positions within the group control (IVG2) of the destination group (AG2), for which it can be decided in dependence on the validity of a connection whether the searching process is to be broken off or continued after the treatment of a bus bar (SS).

3. Method according to claim 1, characterised thereby, that the request of the central control (IVZ) for the switching-through of a connection ceases when it becomes evident that a connection cannot or must not come into being by reason of the state of connection of the desired terminal organ and the authorisation of the participating terminal organs.

## Revendications

1. Procédé pour commander l'établissement de liaisons dans des installations de commutation de communication, qui réalisent une interconnexion numérique conformément au principe du multiplexage temporel et possèdent un dispositif de couplage temporel-spatialtemporel, de manière à relier entre eux les organes de raccordement réunis selon des groupes, et selon lequel les coupleurs à multiplexage temporel sont réunis aux coupleurs de multiplexage spatial (KS1-KSn) par l'intermédiaire de conducteurs omnibus particuliers respectifs (SS1.1-SS1.n), et selon lequel en dehors de dispositifs décentralisés (IVG1-IVGn) de commande de groupe, il est prévu au moins un dispositif central de commande (IVZ),
caractérisé en ce
que la détermination de l'instant d'interconnexion (position temporelle) et l'affectation de la voie d'interconnexion sont réalisées exclusivement par les dispositifs décentralisés de commande de groupe (IVG), la position temporelle et les données, qui caractérisent le conducteur omnibus (SS), parvenant selon un trajet direct passant par un système commun de lignes de transmission de données (BUS), depuis le dispositif de commande de groupe (par exemple IVG1), qui déclenche l'établissement de la liaison, à l'unité de commande de groupe (par exemple IVG2) du groupe de destination (AG2), qui est déterminé par une sélection réalisée dans l'unité de commande centrale (IVZ), que l'unité de commande de groupe (IVG2) du groupe de destination (AG2) renvoie, conjointement avec une information concernant l'état de la liaison de l'organe de raccordement désiré, une information concernant l'unité de commande de groupe (IVG1), qui déclenche l'établissement de la liaison, du groupe d'origine (AG1), avec indication des positions temporelles qui sont libres dans le conducteur omnibus (par exemple SS1.1, SS2.1), proposé pour l'interconnexion,
qu'une demande est adressée à l'unité de commande de groupe (IVG2) du groupe de destination (AG2) pour qu'il recherche des positions temporelles libres dans au moins un autre conducteur omnibus (par exemple SS2.2; SS1.2) qui, dans le coupleur à multiplexage temporel du groupe d'origine (AG1) possède des positions temporelles libres, lorsqu'une interconnexion n'a pas été possible en raison de l'absence de position temporelle libre dans le cas du groupe de destination (AG2), dans le conducteur omnibus (SS1.1; SS2.1) prévu à l'origine,
qu'après la détection de positions temporelles libres une information est émise en direction de l'unité de commande centrale (IVZ), des deux côtés, à partir de l'unité de commande de groupe (IVG1) déclenchant l'établissement de la liaison, auquel cas les positions temporelles devant être utilisées et le conducteur formant bus, qui doit être interconnecté pour cette liaison, étant indiqués dans cette information, et
qu'ensuite des conversions de positions temporelles sont réalisées avec le dispositif (ZU1 ou ZU2) de conversion de positions temporelles, qui est situé dans l'étage de couplage spatial considéré (KS1 ou KS2), de telle sorte que respectivement une position temporelle d'émission est associée à une position temporelle de réception.

2. Procédé selon la revendication 1,
caractérisé en ce que lors de la recherche de positions temporelles libres à l'intérieur de l'unité de commande de groupe (IVG2) du groupe de destination (AG2), les positions temporelles sont considérées respectivement en rapport avec un conducteur omnibus (SS), et en fonction du degré de valeur d'une liaison, une détermination est prise pour savoir si le processus de recherche doit être interrompu ou poursuivi après le traitement d'un conducteur formant bus (SS).

3. Procédé selon la revendication 1, caractérisé en ce
que la demande de l'unité de commande centrale (IVZ) pour une interconnexion d'une liaison est supprimée lorsqu'en raison de l'état de la liaison de l'organe de raccordement désiré et de l'autorisation des organes de raccordement participants, il s'avère qu'une liaison ne peut pas être établie ou ne doit pas être établie.
